(19) Europäisches Patentamt
European Patent Office
Office européen des brevets

(11) **EP 4 012 463 B1**

(12) **EUROPEAN PATENT SPECIFICATION**

(45) Date of publication and mention
of the grant of the patent:
**30.07.2025 Bulletin 2025/31**

(21) Application number: **20863106.9**

(22) Date of filing: **07.09.2020**

(51) International Patent Classification (IPC):
**G02B 3/14** *(2006.01)*     **G02B 30/22** *(2020.01)*
**G02B 6/10** *(2006.01)*

(52) Cooperative Patent Classification (CPC):
**G02F 1/294; G02B 3/14;** G02B 6/0011;
G02B 27/0172; G02B 30/22; G02C 7/083;
G02C 2202/16

(86) International application number:
**PCT/KR2020/012040**

(87) International publication number:
**WO 2021/049831 (18.03.2021 Gazette 2021/11)**

(54) **DISPLAY DEVICE AND SYSTEM COMPRISING SAME**

ANZEIGEVORRICHTUNG UND SYSTEM DAMIT

DISPOSITIF D'AFFICHAGE ET SYSTÈME LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.09.2019 RU 2019128260
19.03.2020 KR 20200034048**

(43) Date of publication of application:
**15.06.2022 Bulletin 2022/24**

(73) Proprietor: **Samsung Electronics Co., Ltd.
Suwon-si, Gyeonggi-do 16677 (KR)**

(72) Inventors:
• **DANILOVA, Svetlana Vladimirovna**
**Suwon-si, Gyeonggi-do, 16677 (KR)**
• **TIGAEV, Vladislav Olegovich**
**Suwon-si, Gyeonggi-do, 16677 (KR)**
• **VOSTRIKOV, Gavril Nikolaevich**
**Suwon-si, Gyeonggi-do, 16677 (KR)**
• **MURAVEV, Nikolay Victorovich**
**Suwon-si, Gyeonggi-do, 16677 (KR)**
• **POPOV, Mikhail Viacheslavovich**
**Suwon-si, Gyeonggi-do, 16677 (KR)**
• **PISKUNOV, Dmitriy Evgenyevich**
**Suwon-si, Gyeonggi-do, 16677 (KR)**

(74) Representative: **Gulde & Partner
Patent- und Rechtsanwaltskanzlei mbB
Berliner Freiheit 2
10785 Berlin (DE)**

(56) References cited:
WO-A1-2018/231784     KR-A- 20180 095 903
US-A1- 2014 347 619     US-A1- 2015 234 187
US-A1- 2018 129 048     US-A1- 2018 275 394
US-A1- 2018 284 464     US-B1- 10 379 419

• PISKUNOV DMITRY E ET AL: "Tunable lens for
AR headset", SPIE PROCEEDINGS;
[PROCEEDINGS OF SPIE ISSN 0277-786X], SPIE,
US, vol. 11350, 30 March 2020 (2020-03-30),
pages 113500F - 113500F, XP060130968, ISBN:
978-1-5106-3673-6, DOI: 10.1117/12.2565635

**Description**

TECHNICAL FIELD

Embodiments of the disclosure set forth herein relate to an augmented reality (AR) or virtual reality (VR) system, and more particularly, to a display device of an AR/VR system, which includes a variable lens for adjusting a focus of an image according to a position of the virtual image, a user's eyesight, and a position of an object, and a system including the display device.

BACKGROUND ART

In an augmented reality (AR) or virtual reality (VR) system, it is important to develop an apparatus for displaying a virtual image for a user, and especially, an AR image superimposed on a real-world image. From a user's viewpoint, in an image display of the AR or VR system, it is required to provide relatively high performance with a realistic sense of depth of a VR image, a high visual acuity (especially for users with a refractive error in their eyes), and a minimum size of a display device. From an AR or VR system developer's viewpoint, a wide range of optical power (-4 diopters to +4 diopters), controlling a small diopter (e.g., 0.25 diopters), and small form factors to be applied to a system such as a headset or a head-mounted device, smart glasses, or the like are required for a display device. One existing problem of the related art is a vergence-accommodation conflict (VAC) causing a user to experience eyestrain. Focal lengths of most AR or VR headsets are fixed, and a virtual image cannot be converted within such a focal length. Therefore, a focal length for bringing the user's eyes into focus and the convergence of the eyes are not on a same plane while the eyes are adjusting. Accordingly, the user would suffer from eyestrain, headache, nausea, or the like. The so-called vergence-accommodation conflict (VAC) occurs when not only a virtual object within a fixed focal length but also an actual object within another focal length are simultaneously observed through an AR device. In this case, when the eye is focused on an object, the eye may be focused on the virtual object or an observable actual external-world object but cannot be focused on both of these objects simultaneously. In the case of VR, the VAC occurs when a focal plane (for adjustment of the eye on a display) does not match a relative size of an object (an axis of convergence of the eye on an object). In similar regards, publication US 2018/284464 A1 relates to a head-mounted display including an electronic display and an optical component configurable to provide multiple optical distances, publication US 2014/347619 A1 relates to an LCD element arranged in a stacked structure configured to reduce the thickness variation of the liquid crystal layer, publication US 2018/275394 A1 relates to an augmented reality device with tuneable lenses for adjusting the apparent distance between the viewer and virtual content, and publication US 10 379 419 B1 relates to a head-mounted display including a multifocal block configured to adjust the orientation of light such that it appears at certain focal distances from the user.

DESCRIPTION OF EMBODIMENTS

TECHNICAL PROBLEM

Embodiments of the disclosure provide a display device capable of changing a focal length and a system including the same.

SOLUTION TO PROBLEM

According to an embodiment of the disclosure, a display device includes at least one virtual object image source and at least one variable lens, corresponding to the appended claims.

ADVANTAGEOUS EFFECTS OF DISCLOSURE

A display device according to an embodiment of the disclosure is capable of adjusting optical power by at least one variable lens according to an equidistant dioptric step. Accordingly, a wide range of total optical power can be provided.
A system including a display device according to an embodiment of the disclosure is applicable to an augmented reality (AR) system or a virtual reality (VR) system and is capable of reducing a user's eyestrain.

BRIEF DESCRIPTION OF DRAWINGS

The drawings are provided herein to assist in understanding the essence of the disclosure. The drawings are schematic diagrams and are not shown to scale. The drawings are for illustrative purposes only and are not intended to limit the scope of the disclosure.

FIG. 1 is a schematic view of a display device according to an embodiment of the disclosure.

FIG. 2 illustrates an example of a variable lens of a display device, according to an embodiment of the disclosure.

FIG. 3 illustrates an electrode pattern of a display device, according to an embodiment of the disclosure.

FIG. 4 illustrates examples of a variable lens of a display device, according to an embodiment of the disclosure.

FIG. 5 illustrates an example of a variable lens of a display device, according to an embodiment of the disclosure.

FIG. 6 is a modified example of the display device of FIG. 1.

FIG. 7 is a modified example of the display device of FIG. 1.

FIG. 8 is a schematic view of a display device according to another embodiment of the disclosure.

FIG. 9 is a modified example of the display device of FIG. 8.

FIG. 10 is a modified example of the display device of FIG. 8.

FIG. 11 illustrates an equidistant dioptric step of a display device, according to an embodiment of the disclosure.

FIG. 12 illustrates an equidistant dioptric step of a display device, according to another embodiment of the disclosure.

FIG. 13 is a schematic view of a display device according to another embodiment of the disclosure.

FIG. 14 is a diagram for describing an operation of a variable optical cell having a strip electrode pattern of a display device, according to an embodiment of the disclosure.

FIG. 15 is a diagram for describing an operation of a variable optical cell having a strip electrode pattern of a display device, according to an embodiment of the disclosure.

FIG. 16 is a diagram for describing an operation of a variable optical cell having a concentric ring electrode pattern of a display device, according to an embodiment of the disclosure.

FIG. 17 is a diagram for describing an operation of a variable optical cell having a concentric ring electrode pattern of a display device, according to an embodiment of the disclosure.

FIG. 18 illustrates an example in which a display device includes four variable optical cells each having a strip electrode pattern, according to an embodiment of the disclosure.

FIG. 19 illustrates an example in which a display device includes two variable optical cells each having a concentric ring electrode pattern, according to an embodiment of the disclosure.

MODE OF DISCLOSURE

Hereinafter, a display device and a system including the same according to various embodiments of the disclosure will be described in detail with reference to the accompanying drawings. In the drawings, the same reference numerals represent the same elements and a size of each element may be exaggerated for clarity and convenience of description. Terms such as first and second may be used to describe various components but the components should not be limited by the terms. The terms are only used to distinguish one component from another.

As used herein, the singular expressions are intended to include plural forms as well, unless the context clearly dictates otherwise. It will be understood that when an element is referred to as "including" another element, the element may further include other elements unless mentioned otherwise. In the drawing, the size or thickness of each component may be exaggerated for clarity. When a material layer is described as being on a substrate or another layer, the material layer may be in direct contact with the substrate or the other layer or a third layer may be present between the material layer and the substrate or the other layer. In the following embodiments, materials of each layer are only examples and thus other materials are available.

Terms such as "unit", "module," and the like, when used herein, represent units for processing at least one function or operation, which may be implemented by hardware, software, or a combination of hardware and software.

Operations described in embodiments set forth herein are only examples and thus the scope of the disclosure is not limited thereby in any way. For brevity of the specification, a description of existing electronic configurations, control systems, software, and other functional aspects of the systems may be omitted. Lines or members connecting components illustrated in the drawings are illustrative of functional connections and/or physical or circuit connections between the components and thus may be replaced or various functional, physical or circuit connections may be added in an actual device.

The term "the" and demonstratives similar thereto may be understood to include both singular and plural forms.

Unless explicitly stated that operations of a method should be performed in an order described below, the operations may be performed in an appropriate order. In addition, all terms indicating examples (e.g., etc.) are only for the purpose of describing technical ideas in detail, and thus the scope of the present disclosure is not limited by these terms unless limited by the claims.

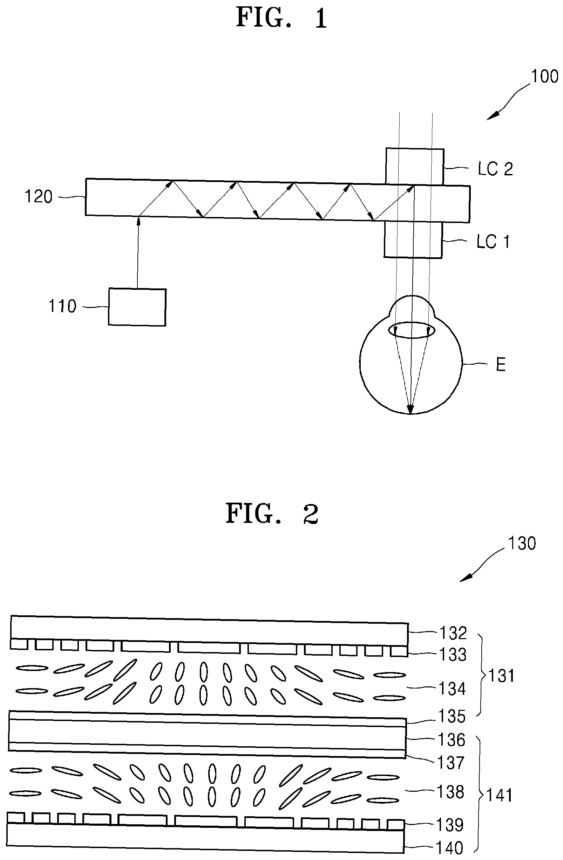

FIG. 1 is a schematic view of a display device according to an embodiment of the disclosure. A display device 100 may include at least two variable lenses for a user's eye E. For example, the display device 100 may include a first variable lens LC1 and a second variable lens LC2 for the user's eye E. The display device 100 may include a virtual object image source 110 and a light guide plate 120 for transmitting light from the virtual object image source 110. The virtual object image source 110 may include, for example, a liquid crystal display, an organic light-emitting diode (OLED) display, a light-emitting diode (LED) display, and the like.

The virtual object image source 110 may be located at one end of the light guide plate 120. The first and second variable lenses LC1 and LC2 may be located at another end of the light guide plate 120. Optical radiation forming a virtual object image may be transmitted along the light guide plate 120 from the virtual object image source 110 to the first variable lens LC1.

As shown in FIG. 1, light output from the light guide plate 120 may be transmitted to the user's eye E through the first variable lens LC1. The first variable lens LC1 may allow a virtual object image to be moved along an optical axis and a vergence-accommodation conflict of the eye to be canceled.

The second variable lens LC2 is configured to compensate for optical power induced by the first variable lens LC1, so that a user may observe an object in the external (real) world as if the user views the external world without a headset. Therefore, the user may feel as if he or she is looking at the external world with the naked eye without an AR system. At least one variable lens may be combined with a virtual object image source through the light guide plate 120. One end of the light guide plate 120 may be coupled to the virtual object image source 110, and a virtual object image with optical power of $D_0=0$ (parallel beam) may be created through at least one variable lens.

Another end of the light guide plate 120 may be interposed between the first and second variable lenses LC1 and LC2. Optical radiation forming a virtual object image transmitted by the light guide plate 120 is reflected from an inner surface of the light guide plate 120 and enters the user's eye E through the first variable lens LC1.

Each of at least one variable lens may include at least two variable optical cells. At least one variable lens may have a stacked structure in which at least two variable optical cells are stacked. FIG. 2 is a view of an example of a variable optical cell.

Referring to FIG. 2, at least two variable optical cells 130 may include, for example, a first variable optical cell 131 and a second variable optical cell 141. The first variable optical cell 131 may include a first electrode 133, a second electrode 135, and a first liquid crystal layer 134 between the first electrode 133 and the second electrode 135. The first electrode 133 may be provided on a first substrate 132. The second electrode 135 may be provided on a second substrate 136. The first substrate 132 and the second substrate 135 may be, for example, transparent substrates. The first electrode 133 may include pixel electrodes spaced apart from each other, and the second electrode 135 may be a common electrode. A voltage may be applied independently through the first electrode 133. That is, the first electrode 133 may be an addressable electrode. The positions of the first electrode 133 and the second electrode 135 may be switched around.

The second variable optical cell 141 may include a third electrode 137, a fourth electrode 139, and a second liquid crystal layer 138 between the third electrode 137 and the fourth electrode 139. The third electrode 137 may be provided on the second substrate 135, and the fourth electrode 139 may be provided on a third substrate 140. The second substrate 136 may be commonly used for the second electrode 135 and the third electrode 137. That is, the second electrode 135 may be provided on one side of the substrate 136, and the third electrode 137 may be provided on another side of the second substrate 136. However, the disclosure is not limited thereto, and a substrate may be provided for each of the second electrode 135 and the third electrode 137.

The third electrode 137 may be provided as a common electrode, and the fourth electrode 139 may be provided as pixel electrodes spaced apart from each other. A voltage may be applied independently through the fourth electrode 139. That is, the fourth electrode 139 may be an addressable electrode. The positions of the third electrode 137 and the fourth electrode 139 may be switched around. The second substrate 136 may include an insulating material.

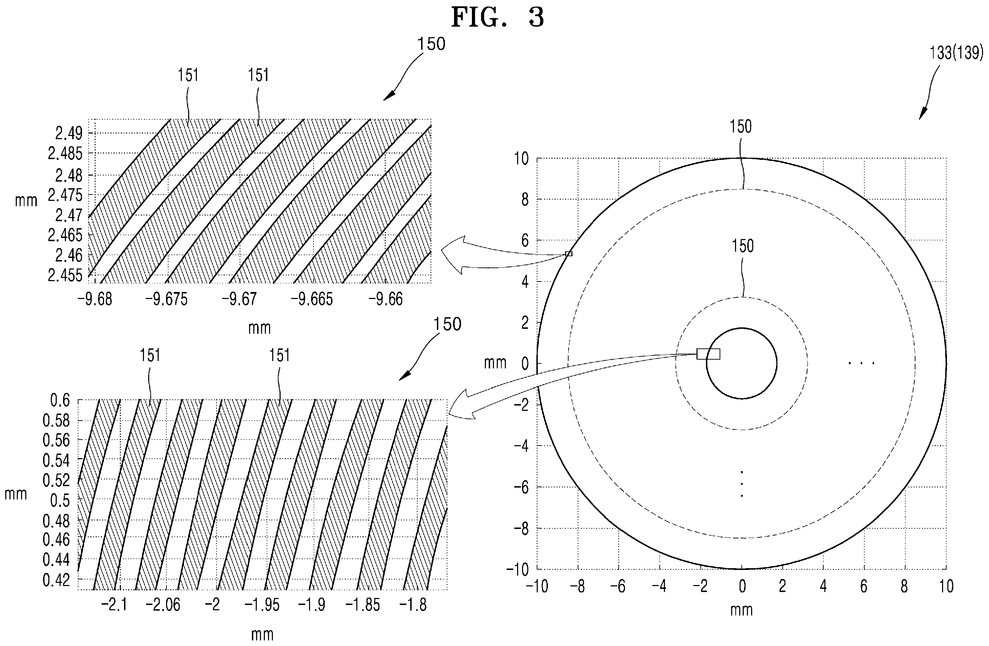

Referring to FIG. 3, the first electrode 133 and the fourth electrode 139 may include electrode patterns spaced apart from each other. For example, the first electrode 133 and the fourth electrode 139 may have a concentric ring electrode pattern. However, the structure of the electrode patterns is not limited thereto and may be variously changed, for example, to parallel strip electrode patterns, as will be described below.

The first electrode 133 and the fourth electrode 139 may include, for example, a plurality of Fresnel regions 150. Each of the plurality of Fresnel regions 150 may include at least one electrode 151. The plurality of Fresnel regions 150 may include different numbers of electrodes 151. The first electrode 133 and the fourth electrode 139 may include different numbers of Fresnel regions. A focal length of a variable lens may be adjusted by adjusting the number of Fresnel regions, the number of electrodes, electrode patterns, and the like.

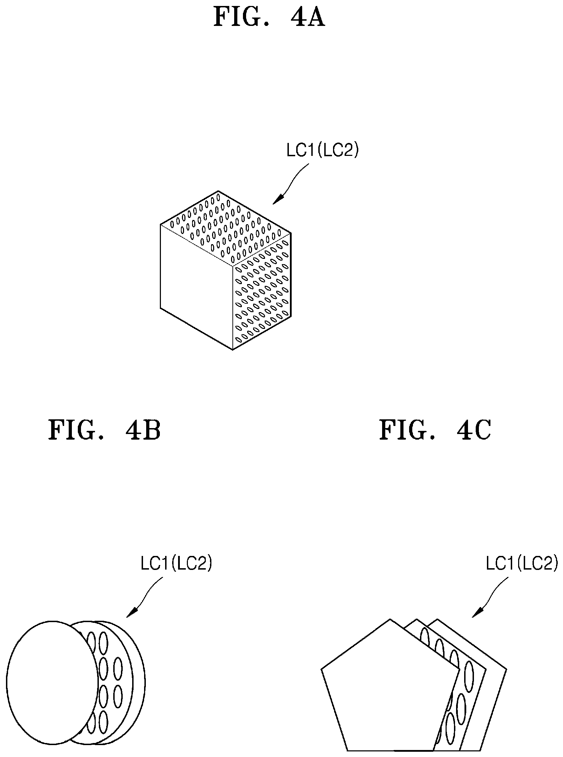

As shown in FIG. 4, the first and second variable lenses LC1 and LC2 may have various cross-sectional shapes such as a rectangular cross-sectional shape (see FIG. 4A), a circular cross-sectional shape (see FIG. 4B), and a pentagonal shape (see FIG. 4C). The first and second variable lenses LC1 and LC2 are not limited thereto and may have various shapes such as a polygonal shape or a curved shape.

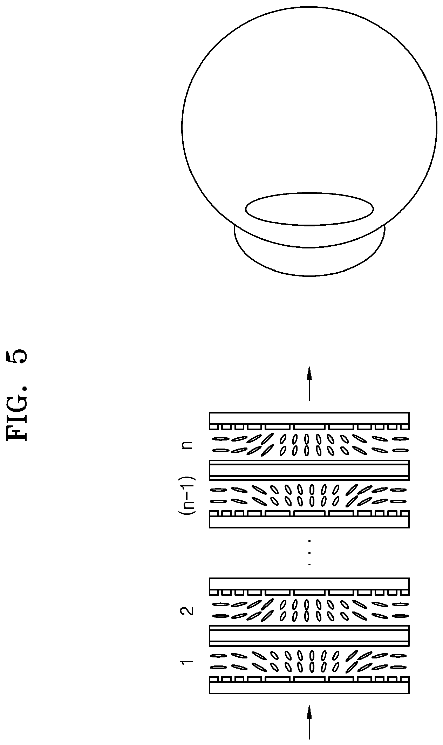

Although FIG. 2 illustrates an example in which a variable lens includes two variable optical cells, a variable lens may include first to $n^{th}$ variable optical cells 1, 2, ..., n, and the first to $n^{th}$ variable optical cells 1, 2, ..., n may be stacked as shown in FIG. 5. When the number of variable optical cells is large, a range of optical power may increase but the volume of the entire system may increase and thus the number of variable optical cells may be adjusted as needed.

A lens aperture and the range of optical power are parameters among main parameters of a display device in an AR or VR system. In the AR or VR system, a large aperture is required to provide realistic awareness of a depth of field of a virtual object image. However, in the case of a variable lens with a large aperture, a radius r of the variable lens is large, and a range of optical power D may be limited because the amount of achievable optical power becomes smaller as the radius r increases.

A maximum number Nmax of electrodes with respect to the optical power D of the variable lens may be expressed by:

$$N_{max} = \cfrac{1}{\cfrac{r \cdot D \cdot \Delta R}{2\lambda} \cdot (2 - \cfrac{\Delta R}{r})} \qquad \text{<Equation 1>}$$

Here, Nmax denotes a maximum number of addressable electrodes per Fresnel region of a variable lens having optical power D, a lens radius r, and a wavelength $\lambda$. In a variable optical cell, addressable electrodes are arranged, and $\triangle$R represents a same technological restriction as the sum of the minimum technically achievable width of an electrode and the minimum technically achievable distance between electrodes with respect to a period including a size of an electrode and a distance between electrodes. Here, the sum of a width of a last electrode and a distance from the last electrode to a previous electrode is a value greater than or equal to the technological restriction $\triangle$R.

According to an embodiment of the disclosure, a display device for an AR or VR system may include at least one variable lens, and each of the at least one variable lens may include at least two variable optical cells. The at least two variable optical cells may include an electrode pattern configured to adjust a focal length of the variable lens, and adjust optical power of the at least one variable lens according to the equidistant dioptric step $\triangle$.

According to an embodiment of the disclosure, a wide range of optical power, e.g., a range of -4 diopters to +4 diopters and a large lens aperture, e.g., at least 20 mm, may be provided. The wide range of optical power and the large lens aperture may be implemented using several variable optical cells and a combination of the number of electrode patterns and the number of electrodes that are correlated to the variable optical cells.

According to an embodiment of the disclosure, the range of optical power is selected as -Dmax or Dmax and provided to a display device with the equidistant dioptric step $\triangle$ using a lens having the lens radius r and subject to the technological restriction $\triangle$R of an electrode arrangement period.

A minimum diffraction efficiency $\eta$ may be selected according to actual requirements of an optical system. Based on the selected diffraction efficiency, the number L of phase levels per Fresnel region of a variable lens is calculated by the following equation:

$$\eta\,(L) = sinc^2\!\left(\frac{1}{L}\right) = \left[\frac{\sin\,(\pi/L)}{\pi/L}\right]^2 \qquad \text{<Equation 2>}$$

According to an embodiment of the disclosure, the equidistant dioptric step $\triangle$ may be provided as described below. The first variable optical cell 131 having minimum $A$ optical power may be selected and a system inequality of

$$\begin{cases} k_1 \cdot L \leq N_1 \leq \cfrac{A}{\Delta} \\[2mm] \cfrac{N_1}{k_1!} = integer \end{cases}$$

may be resolved, thereby obtaining a value k1. N1 denotes a minimum number of electrodes. Maximum optical power of the first variable optical cell 131 is calculated using the value k1, wherein k1 is an optical power variable. k1 represents a degree to which maximum optical power is greater than minimum optical power with respect to a given lens. L denotes the number of phase levels per Fresnel region for the given lens. A is a constant calculated by the following equation:

$$A = \cfrac{1}{\cfrac{r \cdot \Delta R}{2 \cdot \lambda}(2 - \cfrac{\Delta R}{r})} = const \qquad \text{<Equation 3>}$$

Using the obtained value k1, the minimum number N1 of the electrodes may be calculated for the first variable optical cell 131. Therefore, an electrode structure of the first variable optical cell 131 may be determined by calculating the minimum optical power and the maximum optical power for the first variable optical cell 131 and a minimum number of electrodes needed to provide the minimum optical power and the maximum optical power.

Next, the second variable optical cell 141 having minimum optical power $D_2^{min} = k_1 \cdot \Delta$ may be selected, a

$$\begin{cases} k_2 \cdot L \leq N_2 \leq \dfrac{A}{k_1 \cdot \Delta} \\ \dfrac{N_2}{k_2!} = integer \\ k_2 \cdot k_1 \cdot \Delta + k_1 \cdot \Delta \geq D^{max} \end{cases}$$

system inequality of may be resolved, a maximum value of a value $k_2$ may be obtained. In addition, maximum optical power $D_2^{max} = k_2 \cdot k_1 \cdot \Delta$ of the second variable optical cell 141 may be obtained. With respect to the value $k_2$, a minimum number $N_2$ of electrodes per Fresnel region of the second variable optical cell 141 may be determined, wherein $N_2$ may be determined by the values N1, L, and $\Delta$.

When a value of the system inequality for the second variable optical cell 141 cannot be calculated, more variable optical cells are needed. In addition to the first and second variable optical cells 131 and 141 described above, a third variable optical cell having minimum optical power $D_3^{max} = k_3 \cdot k_2 \cdot k_1 \cdot \Delta$ may be further provided. An example in which three or more variable optical cells are provided is illustrated in FIG. 5.

For the third variable optical cell, a value of the system inequality may be calculated by:

$$\begin{cases} k_2 \cdot L \leq N_2 \leq \dfrac{A}{k_1 \cdot \Delta} \; ; \; k_3 \cdot L \leq N_3 \leq \dfrac{A}{k_2 \cdot k_1 \cdot \Delta} \\ \dfrac{N_2}{k_2!} = integer ; \; \dfrac{N_3}{k_3!} = integer \\ k_3 \cdot k_2 \cdot k_1 \cdot \Delta + k_2 \cdot k_1 \cdot \Delta + k_1 \cdot \Delta \geq D^{max} \end{cases}$$

A maximum value of $k_2$ may be calculated, maximum optical power $D_2^{max} = k_2 \cdot k_1 \cdot \Delta$ of a second variable optical cell may be calculated, a maximum value of $k_3$ may be calculated, and maximum optical power $D_3^{max} = k_3 \cdot k_2 \cdot k_1 \cdot \Delta$ of a third variable optical cell may be calculated. Using the obtained values $k_2$ and $k_3$, the minimum number $N_2$ of electrodes per Fresnel region of the second variable optical cell may be calculated, and thereafter, a minimum number $N_3$ of electrodes per Fresnel region of the third variable optical cell may be calculated.

According to an embodiment of the disclosure, the number of variable lenses including at least two variable optical cells may be selected according to features of a display device of an AR or VR system according to an embodiment of the disclosure. For example, at least one variable lens may be provided for implementation of the AR or VR system. The number of variable lenses in a display device does not depend on whether vision correction is required or not, because the optical power of a lens for moving a virtual image may vary according to an amount of refraction error according to a user's eyesight.

Therefore, according to an embodiment of the disclosure, a lens designed for vision correction may not be additionally needed. Nevertheless, in some embodiments of the disclosure, a variable lens designed to correct a user's eyesight may be used but the scope of the disclosure is not limited to and should not be understood as being limited to the embodiments of the disclosure. In other words, it is not necessary to additionally use a variable lens for a user's vision correction. Some embodiments of the disclosure described below may be considered, in which one or two variable lenses are applied to an AR or VR system.

A display device according to an embodiment of the disclosure may include one or more variable lenses. Each of the at least one variable lens may include at least two variable optical cells. In an embodiment of the disclosure, the number of variable optical cells of each of the at least one variable lens and the number of electrodes of each variable optical cell may be determined by a desired range of optical power, a desired equidistant dioptric step, a desired diffraction efficiency, a technological restriction according to a minimum technically achievable electrode period, etc.

As described above, in a display device according to an embodiment of the disclosure, the number of variable lenses may be determined according to whether the display device is used in an AR system or a VR system, whether a user's eyesight is normal or need to be corrected, etc. In a display device applied to a VR system, at least one variable lens with at least two variable optical cells may be provided. A variable lens may be designed to convert a virtual object image according to a desired range of optical power and a desired equidistant dioptric step (i.e., that are required to resolve a VAC).

When correction of a user's vision is required (i.e., when the user's eyesight is not within a normal range), the display device of the AR system may include two or more variable lenses each including at least two variable optical cells. Alternatively, when correction of the user's vision is required (i.e., when the user's eyesight is not within a normal range), the display device of the AR system may include at least one variable lens including at least two variable optical cells. That is, in this case, only one variable lens may be provided.

The variable lens may convert a virtual object image to a desired range of optical power and a desired equidistant dioptric step (i.e., to for fixing a VAC problem). However, unlike a case in which a user's eyesight is normal, a value of optical power of at least one variable lens used may be adjusted using a refractive error value according to the user's eyesight.

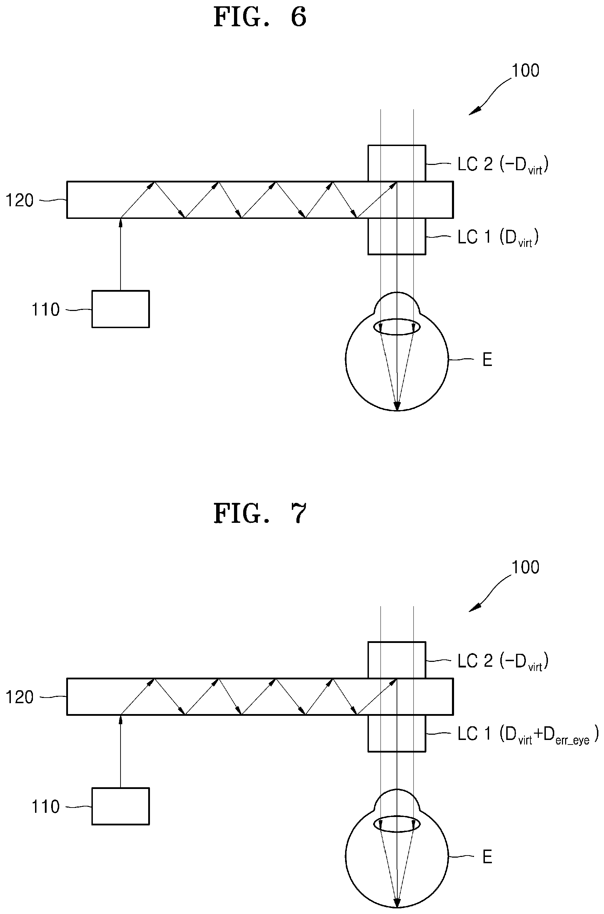

An example of changing a variable lens coupled to the virtual object image source 110 by the light guide plate 120 is shown in FIG. 6.

Referring to FIG. 6, the display device 100 may include a first variable lens LC1 and a second variable lens LC2. The first variable lens LC1 may convert a virtual object image to the same plane as a focal plane on which an actual object of an external world (to fix a VAC). The second variable lens LC2 may adjust a focal length of an actual object image received in the external world. The adjustment of the focal length allows a user to observe the external world with the same resolution and sharpness as those of the virtual object image through the AR system. In this case, optical power of the second variable lens LC2 may be set to be the same magnitude as optical power of the first variable lens LC1 but opposite in sign to the optical power of the first variable lens LC1. That is, the first variable lens LC1 may have optical power DVIRT and the second variable lens LC2 may have optical power -DVIRT.

In this case, in an AR system, each of two or more variable lenses may include two or more variable optical cells. For example, each of the first variable lens LC1 and the second variable lens LC2 may include two or more variable optical cells. Thus, a focal length (optical power) may be adjusted by each variable lens within a desired range and under a given restriction.

In the embodiment of the disclosure shown in FIG. 6, optical power of the first variable lens LC1 and optical power of the second variable lens LC2 may have the same magnitude and opposite signs (i.e., -Dvirt+Dvirt=0). Therefore, a virtual object image may be moved by a focal length corresponding to the optical power of the first variable lens LC1. Because total optical power (-Dvirt+Dvirt) is zero, an external-world image may be directly recognized with a user's eye as if an AR device is not mounted on the user's head. In the present embodiment of the disclosure, an refractive error of the user's eye is not corrected.

In an embodiment of the disclosure shown in FIG. 7, a refractive error of a user's eyes, i.e., the user's eyesight, may be corrected so that the user may observe clear and sharp virtual object images and actual objects. In the present embodiment of the disclosure, a first variable lens LC1 may have first optical power Dvirt and second optical power Derr_eye. A virtual object image may be changed by a desired focal length by using the first optical power Dvirt, and a refractive error of a user's eye may be corrected using the second optical power Derr_eye.

The second variable lens LC2 may have third optical power -Dvirt having the same magnitude as the first optical power Dvirt and a sign opposite to a sign of the first optical power Dvirt. Accordingly, a virtual object image may be viewed without an optical refractive error by moving the virtual object image by the first variable lens LC1 by a focal length corresponding to the sum of the first optical power Dvirt and the second optical power Derr_eye (i.e., Dvirt+Derr_eye). In addition, a user may view an actual object image at a high resolution by adjusting optical power to (-Dvirt+Dvirt+Derr_eye) by the first variable lens LC1 and the second variable lens LC2 in consideration of an optical refractive error. Optical power corresponding to a focal length of an image from an external world includes only the optical power Derr_eye needed to correct a refractive error of a user's eye and thus the user is able to view the image from the external word at a high resolution.

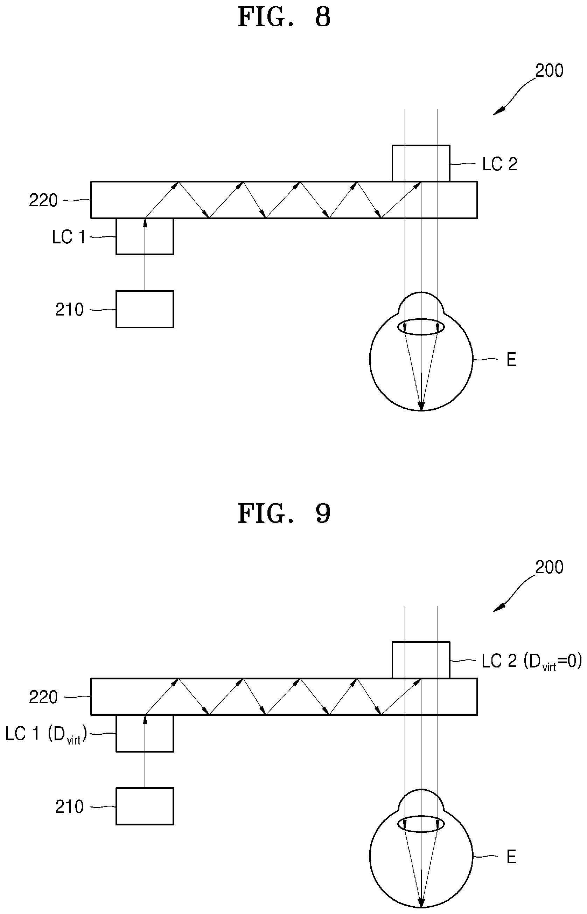

FIG. 8 is a schematic view of a display device according to another embodiment of the disclosure.

A display device 200 is applicable to an AR system or a VR system. The display device 200 may include at least one variable lens for a user's eye E.

The display device 200 may include, for example, a first variable lens LC1 and a second variable lens LC2. The display device 200 may include a virtual object image source 1210 and a light guide plate 220 for transmitting light from the virtual object image source 210.

The virtual object image source 210 may be provided at one end of the light guide plate 220. The first variable lens LC1 may be located between the end of the light guide plate 220 and the virtual object image source 210. The second variable lens LC2 may be located at another end of the light guide plate 220. The second variable lens LC2 may be located at an outer end of the light guide plate 220. Here, the outer end of the light guide plate 220 may represent a side of the light guide plate 220 distant from a user's eye E.

Each of the first variable lens LC1 and the second variable lens LC2 may include at least two variable optical cells. The at least two variable optical cells may include, for example, a first variable optical cell and a second variable optical cell, and the first and second variable optical cells are the same as those shown in FIGS. 2 and 3 and a detailed description thereof will be omitted here.

Optical radiation passing through the first variable lens LC1 may be transmitted through the light guide plate 220. The optical radiation is transmitted through total reflection in the light guide plate 220 and enters the user's eye E.

FIG. 9 is a view for describing an operation of the display device 200 of the embodiment of the disclosure shown in FIG. 8.

The first variable lens LC1 may have first optical power Dvirt needed to convert a virtual object image by a desired focal length. In the present embodiment of the disclosure, the second variable lens LC2 may be selectively provided. That is, the second variable lens LC2 may be removed. Alternatively, a power source of a variable optical cell of the second variable lens LC2 may be turned off to make optical power zero. Thus, in an embodiment of the disclosure, when a user has normal vision, the light guide plate 220 may cause the first variable lens LC1 not to directly face the user's eye E and thus only one variable lens may be provided.

In the present embodiment of the disclosure, the first variable lens LC1 may be placed not to be in contact with a user's eye. For example, as shown in FIG. 9, the first variable lens LC1 may be located between the virtual object image source 210 and the light guide plate 220. Therefore, in the present embodiment of the disclosure, a virtual object image may be moved by a focal length corresponding to optical power of the first variable lens LC1, and an external object image may be viewed with a naked eye as if a head-mounted device is not provided. This is because the second variable lens LC2 is not provided or the power source of the variable optical cell of the second variable lens LC2 is turned off, i.e., optical power of the second variable lens LC2 is zero.

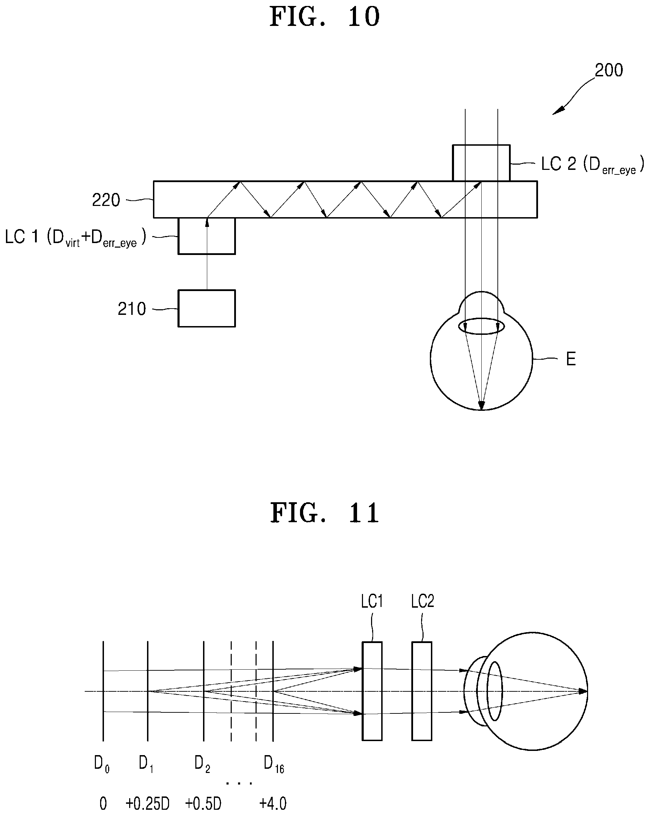

FIG. 10 is a view for describing an operation of the embodiment of FIG. 8 when a refractive error of a user's eye is performed.

In the present embodiment of the disclosure, a first variable lens LC1 may have first optical power Dvirt and second optical power Derr_eye. The first optical power Dvirt corresponds to optical power needed to change a virtual object image by a desired focal length, and the second optical power Derr_eye corresponds to optical power needed to correct a refractive error of a user's eye. The second variable lens LC2 may have third optical power Derr_eye needed to correct a refractive error of a user's eye.

Accordingly, a virtual object image may be moved by a focal length corresponding to the sum of the first optical power Dvirt and the second optical power Deye, i.e., total optical power Dvirt+Derr_eye, and thus the virtual object image may be viewed at a high resolution by the user because optical power is adjusted in consideration of the refractive error of the user's eye.

The third optical power Derr_eye corresponding to a focal length of an external-world image includes only optical power needed to correct the refractive error of the user's eye and thus the external-world image may be viewed by the user without the refractive error.

According to an embodiment of the disclosure, a display device for an AR or VR system may provide an equidistant optical power step $\triangle$ (or an equidistant dioptric step). The number of electrodes N1 for the first variable optical cell 131 may be determined by the equidistant dioptric step $\triangle$ and the number of phase levels L. A radius and width of an electrode pattern may be determined by the number of electrodes N1.

An electrode pattern (a radius and width) of the second variable optical cell 141 may be determined by a value N2 that is the same as a minimum number of electrodes needed to ensure maximum optical power of the second variable optical cell 141 under a given limit. The value $N_2$ may be obtained from the value $N_1$ of the first variable optical cell 131. The obtaining of the value $N_2$ from the value $N_1$ may be understood that the electrode pattern of the second variable optical cell 141 may be determined by the electrode pattern of the first variable optical cell 131 under a given limit and requirements for an optical system.

In an embodiment of the disclosure, electrodes of variable optical cell have a ring shape and may be arranged concentrically, and a concentric electrode pattern is shown in FIG. 3. The concentric electrode pattern may include a first electrode or an $n^{th}$ electrode. The first electrode may have a circle shape and be located at a center of the electrode pattern. However, the electrode pattern is not limited thereto and may have various forms, e.g., a parallel strip shape or a polygonal array. Alternatively, an electrode pattern having an irregular shape may be used.

A variable lens with at least two variable optical cells may have a rectangular, circular or any other appropriate aperture shape according to a shape of the electrode pattern. A lens aperture may have any of various shapes, e.g., a circular, rectangular, or polygonal shape (see FIG. 4).

A lens aperture may match a type of a variable lens, such as an actual requirement, a size restriction, and requirements for a shape and size of an electrode. For example, four variable optical cells with strip parallel electrodes may be provided to form a spherical variable lens in which transmitted light is not dependent on polarization of incident light. Accordingly, light that has undergone polarization in an x-axis direction and a y-axis direction may be focused. In order to focus light that has undergone polarization in the x-axis direction and the y-axis direction, two variable optical cells with concentric ring electrodes may be provided to achieve the same effect as when four variable optical cells with strip parallel electrodes are provided.

According to different factors, a variable optical cell of one or more other embodiments of the disclosure may be desirable within the legal protection scope of the disclosure. For example, a variable optical cell may be adjusted when a thickness of an optical system needs to be reduced (in this case, a ring electrode is selected) or a manufacturing process of electrodes need to be simplified (in this case, a strip electrode is selected).

An electrode pattern with a concentric ring electrode will considered below as a non-limiting example, and it will be understood by those of ordinary skill in the art that the electrode pattern may be embodied as other types of electrode pattern explicitly listed herein.

For example, a variable optical cell may include, for example, a concentric ring electrode pattern with an aperture diameter of 20 mm. Referring to FIGS. 2 and 3, the first variable optical cell 131 may include, for example, twenty-four Fresnel regions 150. The electrodes of the Fresnel region 150 may have a certain width and there may be a gap (a distance indicated by g) between adjacent electrodes. The second variable optical cell 141 may include, for example, ninety six Fresnel regions 150. In this case, the first variable optical cell 131 may provide optical power of a range of 0.25 diopters to 1 diopter (in the case of a variable optical cell with twenty- four Fresnel regions). The second variable optical cell 141 may provide optical power of a range of 1 diopter to 3 diopter (in the case of a variable optical cell with ninety-six Fresnel regions). A range of total optical power of the first and second variable optical cells 131 and 141 may be 0 to 4 diopters.

Two variable optical cells may provide an equidistant dioptric step $\Delta$ within the range total optical power of the first and second variable optical cells 131 and 141.

FIG. 11 illustrates a case in which a focal length is changed with the equidistant dioptric step ($\Delta$) using the first variable lens LC1 and the second variable lens LC2. For example, a display device may provide an equidistant dioptric step of 0.25 D. Accordingly, optical power of 0, 0.25 D, 0.5 D, ..., 4D may be provided. However, the equidistant dioptric step is not limited thereto.

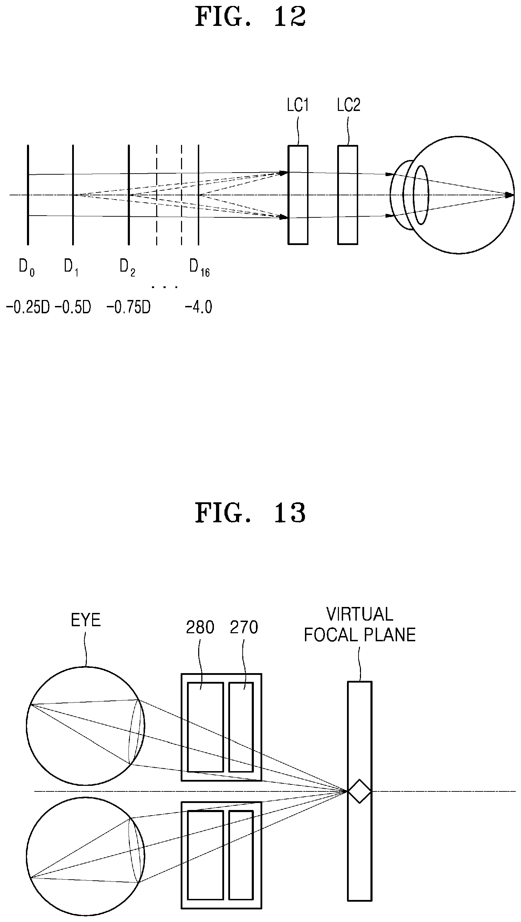

FIG. 12 illustrates an example of compensating for a refractive error for user's vision correction. An equidistant dioptric step of -0.25 D may be provided by a first variable lens LC1 and a second variable lens LC2. Thus, optical power of -0.25 D, -0.5 D, ..., -4D may be provided.

According to an embodiment of the disclosure, a virtual object image may be converted into a field of view of an AR/VR system by using a first variable lens, and a user is able to maintain his or her actual world observation capability. The first variable lens LC1 may assist in maintaining a user's ability to observe the real external world (in the case of an AR system) while converting a virtual object image into a field of view of an AR/VR system. Furthermore, the second variable lens LC2 may be used without correcting a position of an image received from the real external world. As a result, a user is able to view an real-world image transmitted with respect to the user's field of view and a virtual object image at a high resolution within the same focus (see FIGS. 1, 6, and 7).

In another embodiment of the disclosure, the first variable lens LC1 may be positioned between the virtual object image source 210 and the light guide plate 220. Rays are transmitted from the virtual object image source 210 through the first variable lens LC1 and transferred to a user's eye through the light guide plate 220. The second variable lens LC2 is located at a side of the light guide plate 220 in a field of view of the user's eye (see FIGS. 8, 9, and 10).

However, transmitting optical radiation using a light guide plate is not essential for all embodiments of the disclosure. In other words, a display device may be implemented without a light guide plate. For example, a beam splitter may be used to separate rays from an external world and a virtual image source.

Alternatively, referring to FIG. 13, in another embodiment of the disclosure, the virtual object image source 270 may be positioned directly in front of at least one variable lens 280. For example, each of virtual object image sources 270 may be provided for one of a user's eyes. In addition, each of the at least one variable lens 280 may be provided to correspond to one of the virtual object image sources 270. In this case, a focus may be adjusted by the at least one variable lens 280 to provide a virtual object image provided from the virtual object image source 270 to a virtual focal plane. Accordingly, a vergence-accommodation conflict of a user's eye may be fixed.

In an embodiment of the disclosure, there may be no air gap between variable optical cells of variable lens. The number of variable optical cells used in a variable lens according to an embodiment of the disclosure is not necessarily limited to two.

In other embodiments of the disclosure, a larger number of variable optical cells may be provided to solve specific problems (e.g., optical power range extension, an increase in the number of optical power correction steps, etc.). A variable lens formed by a stack (set) of variable optical cells may be arranged using a light guide plate.

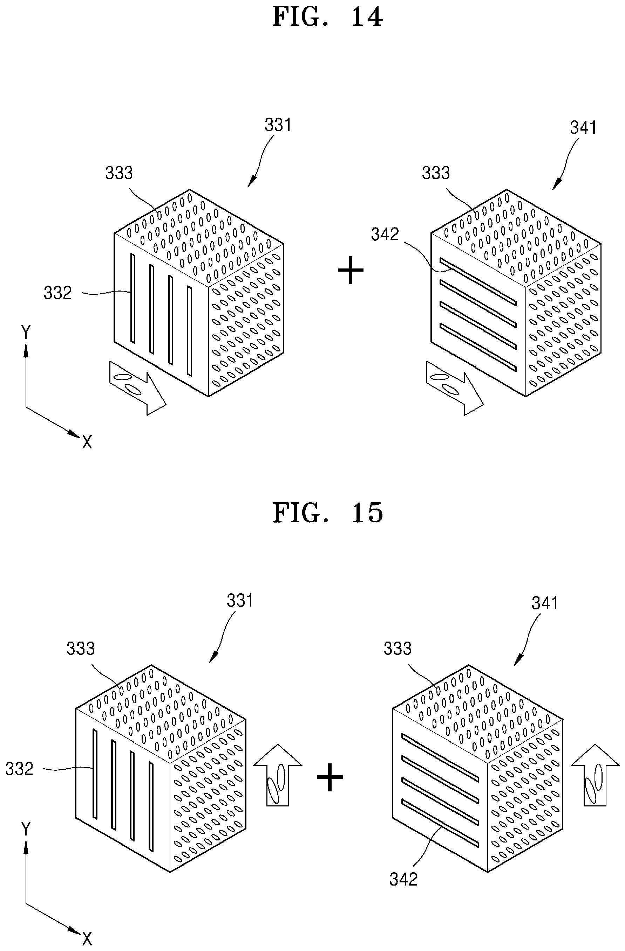

In addition, variable optical cells may be configured to be dependent on or independent from polarization with respect to incident light. For example, a polarization-dependent configuration may be used for a variable optical cell having a strip electrode pattern in which electrodes are arranged in parallel. For example, as shown in FIG. 14, a first variable optical cell 331 may include strip electrodes 332 arranged vertically, and a second variable optical cell 341 may include strip electrodes 342 arranged horizontally. Here, as shown in FIG. 14, when a liquid crystal layer 333 is oriented in a director's direction along an X axis, a variable optical cell may focus light polarized along the X-axis. As shown in FIG. 15, when a liquid crystal layer 333 is oriented in the director's direction along a Y axis, light polarized along the Y-axis may be focused.

Various types of means and methods for focusing polarized or non-polarized light will be apparent to those of ordinary skill in the art. For example, a diagram for focusing light is disclosed in "Development of liquid crystal adaptive lens with a circular electrode for imaging application, and integrated optics": apparatus, material, and technology VII - International Society for Optics and Photonics (Sun Y.N. et al, 2003, T. 4987, C. 209-220).

Light may be focused on a line (e.g., through a cylindrical lens) or a point (e.g., through a spherical lens). The cylindrical lens may be used to focus, for example, light polarized along the Y axis. In an embodiment employing a strip electrode pattern, an orientation of an electrode may be used to focus light corresponding to a direction of a focus line and the director's direction.

In a variable optical cell, incident light may be parallel to an axis of polarization (e.g., the Y axis). When a strip electrode pattern and a cylindrical lens are used, in the case of non-polarized light, two variable optical cells with strip electrodes may be used to focus light, and a direction of an electrode of a first variable optical cell may be perpendicular to a direction of an electrode of a second variable optical cell and be the same as a direction of line on which light is focused.

A director's direction of the first variable optical cell is parallel to the X-axis (polarization along the X axis), and the director's direction of the second variable optical cell may be parallel to the Y axis (polarization along the Y axis). When the strip electrode pattern and a spherical lens are used to perform focusing, e.g., when light polarized along the Y axis is focused, light may be focused using two variable optical cells. Parallel strip electrode patterns are provided, and a direction of the electrode of the first variable optical cell may be perpendicular to a direction of the electrode of the second variable optical cell. In this case, light may be focused on a point.

A direction of an electrode may be parallel to lines through which incident light is focused on each variable optical cell including a strip electrode. Each variable optical cell may be oriented in a director's direction corresponding to the Y-axis direction to focus light polarized along, for example, the Y axis.

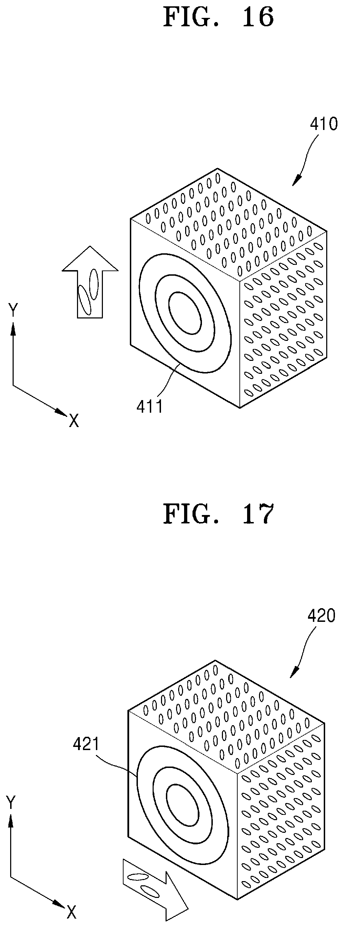

Referring to FIG. 16, in an embodiment employing a ring electrode pattern 351, a variable optical cell 410 may be provided to focus light polarized along the X-axis using, for example, a spherical lens. A director's direction of the variable optical cell 410 may be parallel to a direction (Y axis) in which incident light is polarized.

Referring to FIG. 17, in an embodiment employing a ring electrode pattern 421, a variable optical cell 420 may be provided to focus light polarized along the X-axis using, for example, a spherical lens. A director's direction of the variable optical cell 420 may be parallel to a direction (X axis) in which incident light is polarized.

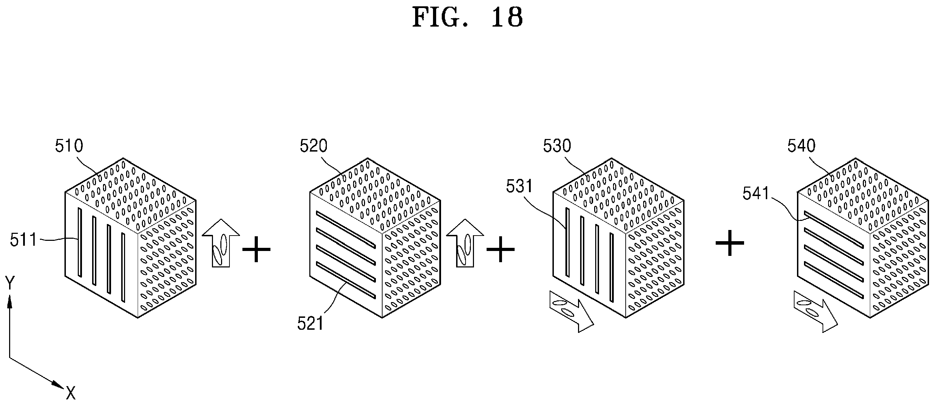

Referring to FIG. 18, in an embodiment employing a strip electrode pattern, first to fourth variable optical cells 510, 520, 530 and 540 may be provided to focus non-polarized light through a spherical lens. The first to fourth variable optical cells 510, 520, 530 and 540 may respectively include first to fourth strip electrodes 511, 521, 53a and 541 that are arranged parallel to one another. The first strip electrode 511 may be arranged in a direction perpendicular to the second strip electrode 521. The third strip electrode 531 may be arranged in a direction perpendicular to the fourth strip electrode 541. The first strip electrode 511 and the third strip electrode 531 may be arranged parallel to each other. The third strip electrode 531 and the fourth strip electrode 541 may be arranged parallel to each other.

The first and second variable optical cells 551 and 552 may be oriented in a director's direction corresponding to a Y-axis direction to focus light polarized along a Y axis. The third and fourth variable optical cells 553 and 554 may be oriented in a director's direction corresponding to an X-axis direction to focus light polarized along an X axis.

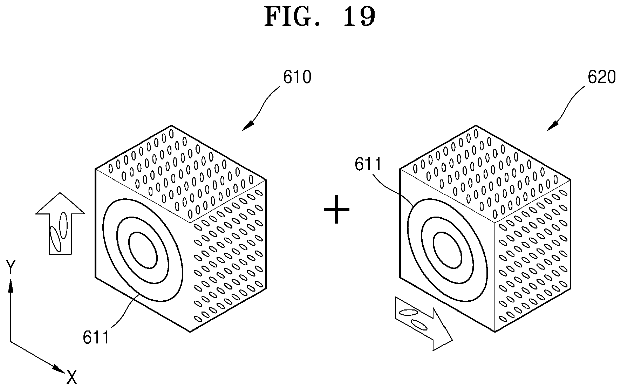

Referring to FIG. 19, in an embodiment employing a ring electrode pattern 611, first and second variable optical cells 610 and 620 may be provided to focus non-polarized light through a spherical lens. The first variable optical cell 610 may be oriented in a director's direction parallel to a Y axis to focus light polarized along the Y axis. The second variable optical cell 620 may be oriented in a director's direction parallel to an X axis to focus light polarized along the X axis.

The above-described embodiments in which focusing is performed using a variable optical cell with a strip electrode pattern or a ring electrode pattern are only examples, and a structure of an electrode is not limited thereto. It will be apparent to those of ordinary skill in the art that an electrode pattern may be configured differently according to another embodiment of the disclosure. All embodiments of the disclosure explicitly described and apparent from the information set forth herein may be included in the legal protection scope of the disclosure.

In an electrode pattern of a variable optical cell, effects of electrodes on an orientation (polarization) of liquid crystal and on optical power of a variable lens with at least two variable optical cells will be described below. A voltage applied to the electrodes changes the orientation of the liquid crystal and thus a refractive index of the liquid crystal changes. Because the electrodes are arranged along an entire surface of the variable optical cell and a certain voltage is applied to the electrodes, a voltage profile is formed in this manner, thereby forming a phase profile of a lens with desired optical power.

The voltage profile is changed to the phase profile by using the dependence of a phase on a voltage, and the dependence may be determined by characteristics of an optically active material such as liquid crystal. (For more details, see "Liquid crystal display", Chen RH: Basic physics and technology - John Wiley & Sons, 2011 or "Active matrix liquid crystal display", Den Boer W.: Basic skills and application - Elsevier, 2011).

According to an embodiment of the disclosure, a display device for an AR/VR system is provided, in which at least one variable lens may be provided for each of a user's eyes. A variable lens may include at least two variable optical cells.

When the number of variable optical cells is greater than 2, a stack (set) of variable optical cells may be used. There may be no air gap between the at least two variable optical cells.

For example, the number of variable optical cells is six, i.e., a maximum number of variable optical cells, when used in an AR system with a lens having a thickness of 1.5 mm, is six. However, the number six is only an example and embodiments of the disclosure are not limited thereto. In an embodiment of the disclosure, a variable lens is thin and the number of variable optical cells depends on a thickness of a substrate used for an electrode pattern.

The optical power provided by such a variable lens is directly proportional to the number of variable optical cells, but an increase in the number of variable optical cells to be used may have a negative effect on other parameters of a proposed apparatus, thereby increasing the weight, size, cost, etc. of the apparatus. Thus, the optical power and the number of variable optical cells may be appropriately adjusted.

At least two variable optical cells with concentric ring electrode patterns spaced apart from each other will be described below. In an embodiment of the disclosure, a diameter of a lens with a variable focus formed by at least two variable optical cells may be, for example, 20 mm. However, 20 mm is only an example and embodiments of the disclosure are not limited thereto.

A variable lens with at least two variable optical cells may have a step $\Delta = 0.25$ diopters and provide maximum optical power $D^{max} = 4$ diopters. The maximum optical power should not be construed as limiting the scope of the disclosure.

In an embodiment of the disclosure, lens diffraction efficiency $\eta(L)$ of 81.1 % may be achieved by setting the number of phases L per Fresnel region to four. A radius R of the variable lens may be 10 mm. With respect to an electrode arrangement period of each of a stack (set) of at least two electrode patterns of a variable optical cell, a technological restriction may be established when the sum of a period $\triangle R$ same as the size of an electrode and the distance between electrodes (indicated by a sign g in an equation) is 4 $\mu$m and the distance between the electrodes is 1 $\mu$m.

When the lens diffraction efficiency $\eta(L)$ described above is considered with respect to the lens parameter,

$$A = \frac{1}{\frac{r \cdot \Delta R}{2 \cdot \lambda}(2 - \frac{\Delta R}{r})} = 13.0026 \ m^{-1}$$

(see Equation 3).

In the present embodiment of the disclosure, for each of the two variable optical cells, the number of electrodes in the electrode pattern of the variable optical cell may be calculated as follows. For a first variable optical cell, the difference between the number of electrodes N1 per Fresnel region and optical power k1 may be calculated by the following system inequality:

$$\begin{cases} k_1 \cdot L \le N_1 \le \dfrac{A}{\Delta} \\ \dfrac{N_1}{k_1!} = \text{integral} \end{cases} \quad A = \frac{1}{\frac{r \cdot \Delta R}{2 \cdot \lambda}(2 - \frac{\Delta R}{r})} = 13.0026 \ m^{-1}$$

<Equation 4>

Here, known values of L and $\Delta$ may be substituted into the system inequality, a constant A may calculated, and problems of the system may be solved by finding a maximum available value k1. To manufacture optimal variable optical cells, it is necessary to ensure a maximum available variable of optical power under the restriction. A minimum value N1 may be found with respect to the value k1. To manufacture optimal variable optical cells, it is necessary to find a minimum number of electrodes to provide these variables for optical power.

The value K1 is needed to find parameters k2 and N2 of a second variable optical cell, and the value N1 is needed to calculate a radius and width of a ring electrode of the first variable optical cell.

For the second variable optical cell, the number of electrode patterns N2 of an electrode pattern may be calculated by the following system inequality:

$$\begin{cases} k_2 \cdot L \le N_2 \le \dfrac{A}{k_1 \cdot \Delta} \\ \dfrac{N_2}{k_2!} = \text{integral} \\ k_2 \cdot k_1 \cdot \Delta + k_1 \cdot \Delta \ge D^{max} \end{cases}$$

<Equation 5>

The value k1 and a given value $D^{max}$ may be substituted into a system inequality of the second variable optical cell, and the system problem may be solved by finding a maximum available value k2 (a maximum value according to a given restriction of the second variable optical cell). For value k2, the minimum value N2 is found. The value N2 is equal to a minimum number of electrodes necessary to provide an optical power variable. The value N2 is needed to calculate a radius and width of the ring electrode of the second variable optical cell.

In the present embodiment of the disclosure, a radius of a ring electrode may be calculated below for the first and second variable optical cells. A general approach method of calculating a radius of a concentric ring electrode is disclosed, for example, in processings of high-efficiency switchable electro-optic diffraction lens applicable to opthalmological optics, Li G. et al.// National Academy of Sciences (2006 - T.103. - No. 16. - C. 6100-6104).

The following equation may be calculated for each electrode with a value (mi, nj). The following equation may be calculated for the first variable optical cell.

$$m_j = 1, ...,m_{d_1},$$

$$m_{d_1} = \frac{r^2 \cdot \Delta}{2\lambda}; n_j = 1,...,N_1 \qquad \text{<Equation 6>}$$

$$r_{m_i,n_j}^{int} = \sqrt{2(m_i - 1 + \frac{n_j - 1}{N_1}) \cdot \frac{\lambda}{\Delta}}$$

$$r_{m_i,n_j}^{ext} = \sqrt{2(m_i - 1 + \frac{n_j}{N_1}) \cdot \frac{\lambda}{\Delta} - g} \qquad \text{<Equation 7>}$$

Here, $r^{int}$ denotes an inner radius of an electrode with the value (mi,nj), $r^{ext}$ denotes an outer radius of the electrode, mi denotes the number of Fresnel regions (the Fresnel regions 150 of FIG. 3), and nj denotes the number of electrodes of one Fresnel region. In the Fresnel region 150, unique electrode numbers are allocated. That is, electrodes 1, 2, 3, ..., are included in a first Fresnel region, and electrodes 1, 2, 3 ... are included in a second Fresnel region. $m_{d_1}$ denotes a maximum number of Fresnel regions for the first variable optical cell having a radius r, a dioptric step $\Delta$ is provided at a radiation wavelength $\lambda$, N1 denotes the number of electrodes per Fresnel region for the first variable optical cell 131 of FIG. 2, $\lambda$ denotes a wavelength of incident radiation, and g denotes the distance between electrodes.

A width of a ring electrode for the first variable optical cell is calculated by the following equation:

$$\Delta w_{i,j}^{(1)} = r_{m_i,n_j}^{ext} - r_{m_i,n_j}^{int} = \sqrt{2\frac{\lambda}{\Delta}} \cdot \left(\sqrt{m_i - 1 + \frac{n_j}{N_1}} - \sqrt{m_i - 1 + \frac{n_j - 1}{N_1}}\right) - g = \Delta w_{i,j}^{(1)}(r,\lambda,\Delta, g,N_1,L) \qquad \text{<Equation 8>}$$

For the second variable optical cell, the same parameters are calculated by the following equations:

$$m_j = 1, ...,m_{d_2},$$

$$m_{d_2} = \frac{r^2 \cdot \Delta}{2\lambda} \cdot k_1; n_j = 1,...,N_2 \qquad \text{<Equation 9>}$$

$$r_{m_i,n_j}^{int} = \sqrt{2(m_i - 1 + \frac{n_j - 1}{N_2}) \cdot \frac{\lambda}{k_1 \cdot \Delta}}$$

$$r_{m_i,n_j}^{ext} = \sqrt{2(m_i - 1 + \frac{n_j}{N_2}) \cdot \frac{\lambda}{k_1 \cdot \Delta} - g} \qquad \text{<Equation 10>}$$

$$r_{m_i n_j}^{ext} = \sqrt{2(m_i - 1 + \frac{n_j}{N_2}) \cdot \frac{\lambda}{k_1 \cdot \Delta} -}$$

$$\Delta w_{i,j}^{(2)} = r_{m_i n_j}^{ext} - r_{m_i n_j}^{int} = \sqrt{2\frac{\lambda}{k_1 \cdot \Delta}} \cdot \left( \sqrt{m_i - 1 + \frac{n_j}{N_2}} - \sqrt{m_i - 1 + \frac{n_j - 1}{N_2}} \right) - g = \Delta w_{i,j}^{(2)}(r,\lambda,\Delta, g, N_1, L, D^{max})$$

<Equation 11>

Here, mj denotes the number of Fresnel regions (the Fresnel regions 150 of FIG. 3) of an electrode pattern of the second variable optical cell, nj denotes the number of electrodes per Fresnel region, $m_{d2}$ denotes a maximum number of Fresnel regions for the second variable optical cell having a radius r, a dioptric step $\Delta$ is provided at a radiation wavelength $\lambda$, and N2 denotes the number of electrodes per Fresnel region for the second variable optical cell 141 of FIG. 2.

As described above, electrode patterns of the first variable optical cell and the second variable optical cell may be configured.

For example, an electrode of each variable optical cell may be formed of indium tin oxide (ITO) but is not limited thereto. In another embodiment of the disclosure, an electrode may be formed of a transparent conductive material well-known to those of ordinary skill in the art, e.g., indium oxide, tin oxide, indium zinc oxide (IZO), zinc oxide or the like.

According to an embodiment of the disclosure, liquid crystal or a polymer gel may be used as an optical active material of a variable optical cell (in this case, the variable optical cell may be referred to as a variable liquid crystal cell). Examples of the optical active material will be apparent to those of ordinary skill in the art, based on the information provided herein. The disclosure has been described above with respect to an example of a liquid crystal variable optical cell but the principles of the disclosure may be also applicable to optical variable cells based on a polymer gel and other optical active materials. In a liquid crystal variable optical cell according to an embodiment of the disclosure, a focal point may be adjusted by electrodes of an electrode pattern of each variable optical cell. An electrode control mechanism is based on two principles.

According to the first principle, addressable electrodes, i.e., electrodes of an electrode pattern of a variable optical cell to which a voltage corresponding to the electrodes may be selected. The selection of the addressable electrodes may be associated with selection of desired optical power. The optical power may vary according to the number of Fresnel regions. That is, the addressable electrodes may be selected according to the number and positions of activated Fresnel regions.

According to the second principle, the voltage applied to the electrodes may be determined by the dependence of the voltage on a phase and features of an optical active material, i.e., a material allowing introduction of a phase delay according to the applied voltage when light is transmitted through the material. When an optical active material of a variable optical cell is selected, the dependence of a phase delay of light on a voltage in an electrode of an electrode pattern should be considered. In order to simulate the introduction of certain optical power, it is necessary to apply a voltage to an electrode such that a phase delay profile of output light matches an ideal thin lens having the same optical power. An entire process may be automated according to a standard algorithm well-known in the art. For details, for example, US20150277151 may be referred to.

In an embodiment of the disclosure, the number of Fresnel regions may be twenty four (md1=24) for the first variable optical cell and may be ninety six (md2=96) for the second variable optical cell. The number of phase levels L for all of variable optical cells is four. Maximum optical power of the first variable optical cell is 1 diopter and maximum optical power of the second variable optical cell is 3 diopters, that is, total optical power of four diopters may be provided.

Each Fresnel region of the first variable optical cell includes twenty-four ring electrodes (N1=24), and each Fresnel region of the second variable optical cell may include twelve ring electrodes (N2=12). Therefore, in an embodiment of the disclosure, 576 electrodes are included in an electrode pattern of the first variable optical cell, and 1152 electrodes are included in an electrode pattern of the second variable optical cell. These parameters may be obtained in an embodiment of the disclosure and should not be understood as limiting the scope of the disclosure or as desirable.

As shown in FIG. 2, a variable lens with at least two variable optical cells may include the first substrate 132 related to the first variable optical cell 131, the second substrate 136, which is a common substrate of the first variable optical cell 131 and the second variable optical cell 141, and the third substrate 140 related to the second variable optical cell. The second electrode 135, which is a common electrode of the first and second variable optical cells 131 and 141, and the third electrode 137 may be provided on both sides of the second substrate 136. The second and third electrodes 135 and 137 may be coated with a transparent conductor that is in a visible light range, e.g., indium tin oxide (ITO), indium oxide, tin oxide, indium zinc oxide (IZO), zinc oxide or the like.

As can be seen from the above calculations, parameters of each electrode related to the first substrate 132 are calculated by equations below.

For electrodes corresponding to Fresnel region numbers mi = 1, ..., d1, when $m_{d_1} = \dfrac{r^2 \cdot \Delta}{2\lambda}$ and numbers assigned to electrodes in one Fresnel region are nj= 1, ..., N1, an inner radius and an outer radius of each electrode is calculated by the following equations:

$$r^{int}_{m_i n_j} = \sqrt{2(m_i - 1 + \frac{n_j - 1}{N_1}) \cdot \frac{\lambda}{\Delta}}$$

$$r^{ext}_{m_i n_j} = \sqrt{2(m_i - 1 + \frac{n_j}{N_1}) \cdot \frac{\lambda}{\Delta} - g}$$

<Equation 12>

In an embodiment of the disclosure, a first electrode in a first Fresnel region of the first variable optical cell 131 has

$$r^{ext}_{1,1} = r_{1,1} - g = \sqrt{\frac{2}{N_1} \cdot \frac{\lambda}{\Delta}} - g$$

a circular shape having an outer radius .

The following equation is applied to ring electrodes (a number other than 1) associated with the first substrate 132 of the first variable optical cell 131.

$$\Delta w_{i,j}^{(1)} = r^{ext}_{m_i n_j} - r^{int}_{m_i n_j} = \sqrt{2\frac{\lambda}{\Delta}} \cdot \left( \sqrt{m_i - 1 + \frac{n_j}{N_1}} - \sqrt{m_i - 1 + \frac{n_j - 1}{N_1}} \right) - g = \Delta w_{i,j}^{(1)}(r, \lambda, \Delta, g, L, N_1)$$

<Equation 13>

Parameters of the fourth electrodes 139 having value (mi; nj) with respect to the third substrate 140 associated with the second variable optical cell 141 is calculated as described below.

In the case of the fourth electrodes 139 having the value mi= 1, ..., md2, $m_{d_2} = \dfrac{r^2 \cdot \Delta}{2\lambda} \cdot k_1$ , nj= 1, ..., N2, N2 is calculated by Equation (5) above and an inner radius and an outer radius are calculated by equations below.

$$r^{int}_{m_i n_j} = \sqrt{2(m_i - 1 + \frac{n_j - 1}{N_2}) \cdot \frac{\lambda}{k_1 \cdot \Delta}} \qquad r^{ext}_{m_i n_j} = \sqrt{2(m_i - 1 + \frac{n_j}{N_2}) \cdot \frac{\lambda}{k_1 \cdot \Delta} - g}$$

$$r^{int}_{m_i n_j} = \sqrt{2(m_i - 1 + \frac{n_j - 1}{N_2}) \cdot \frac{\lambda}{k_1 \cdot \Delta}}$$

<Equation 14>

Equation 11 above may be applied to a ring-shaped fourth electrode 139 associated with the third substrate 140 of the second variable optical cell 141. A material of a substrate of a variable optical cell is selected from transparent material transmitting visible light such as glass, plastic, and quartz but is not limited thereto. A thickness of a substrate according to an embodiment of the disclosure may be, for example, in a range of 3 to 200 $\mu$m. A thickness of an electrode deposited on a substrate may be, for example, in a range of 30 to 200 nm according to a selected material of the electrode, e.g., indium tin oxide (ITO), indium oxide, tin oxide, indium zinc oxide (IZO), or zinc oxide.

A principle for selecting thicknesses of a substate and an electrode according to materials of the substrate and the electrode in an embodiment of the disclosure is well known in the art.

An electrode pattern of a variable optical cell according to an embodiment of the disclosure may be arranged in layers (e.g., two or three layers) to achieve a small distance (e.g., 1 to 3 microns) between electrodes. A total thickness of a variable lens is dependent on a thickness of a substrate more than a thickness of an electrode and thus the thickness of the substate is important when a large number of variable optical cells are used.

As shown in FIG. 13, in a display device for an AR/VR system, a virtual object image source for displaying a virtual object image may be provided in front of a user's eye. As described above, when a virtual object image is placed in front of the eye, a user's viewing an external world may be interrupted. Thus, in the AR system, a transparent virtual object image source may be provided to allow a user to view the external world.

In the AR system, a display device allows the external world and a virtual object image superimposed on an external-world image at the same resolution. A user's position in a virtual object image may be the same as a position of an external object corresponding thereto.

When a display device according to an embodiment of the disclosure is applied to the AR system, a virtual object image source may be formed of a transparent material, such as glass, plastic, or quartz, which transmits visible light therethrough. However, embodiments of the disclosure are not limited thereto.

When the display device is applied to a VR system, a virtual object image source may include, for example, a liquid crystal display (LCD), an organic light-emitting diode (OLED), an inorganic LED (ILED), an active matrix OLED (AMOLED), a transparent OLED (TOLED), a quantum dot display (QOLED or QLED). However, the display device is not limited thereto.

In an embodiment for using the AR system and the VR system, one or more virtual object image sources may be provided. For example, one virtual object image source may be provided for each eye of the user. In this case, a variable lens with at least two variable optical cells is used, a virtual object with a depth of field for a user's field of view (together with an external-world object when needed) may be displayed. To correct a user's eyesight, e.g., nearsightness/a feeling of perspective or presbyopia when needed, the at least two variable optical cells may function as the eye's lens and cornea, and a corneal analogue may be dynamically adjusted in addition to the dynamic adjustment of (or during adjustment of) the eye's lens analogue. The cornea analogue is not included in a human eye but may be included, for example, in a pattern of the eyes of some of birds of prey, e.g., a red-tailed hawk, having a cornea that is changeable in shape.

The first variable optical cell may provide "coarse adjustment" of the eye within the same diopters and the second variable optical cell may provide "fine adjustment" of the eye within, for example, three diopters. Thus, total optical power

$$d^{max}_1 + d^{max}_2 \geq D^{max}$$

may be provided. That is, a range of total optical power provided by a variable lens according to an embodiment of the disclosure may be covered. Accordingly, it possible to remove a VCA of a user's eye and allow the user to view a virtual object image without any discomfort together with an external-world image when needed.

A display device according to an embodiment of the disclosure may be part of an AR/VR system, designed for various purposes, which may be implemented in the form of a VR helmet or AR helmet, smart glasses, a headset or a head-mounted device. A display device according to various embodiments of the disclosure may include one variable lens for a user's eye or one variable lens for each user's eye. In a display device according to an embodiment of the disclosure, a focal point of a variable lens may be controlled by various software and/or hardware components by adjusting a voltage to be applied to an addressable electrode in an electrode pattern of a corresponding variable optical cell.

For controlling of the focal point of the variable lens, the display device may include one or more processors, integrated circuits, and the like, which are specifically designed for this purpose or included in an AR/VR system. This function may be provided together with other functions for operating the AR/VR system. The one or more processors may control a focal point of the variable lens under control of software stored in a computer-readable medium and/or distributed by a well-known wired and/or wireless data transmission technique. The software may be implemented in an appropriate programming language and/or in the form of an executable machine code, and may be stored in an external medium, including a remote medium, from a memory or the AR/VR system or the AR/VR system. The software may connect to the AR/VR system through a well-known data network. All known embodiments of one or more processors, computer programs and computer readable media appropriate for focus adjustment of a variable lens in a display device according to an embodiment of the disclosure may be included in the legal protection scope of the disclosure. In the display device according to an embodiment of the disclosure, a focal point of a variable lens may be controlled, based on various types of input data. Among the various types of input data, data of a virtual object image, data displayed to a user of the AR/ VR system and related to one or more processors, user input data, and features of a user's vision, data obtained from one or more sensors included in the AR/VR system and displayed as a virtual object image source, and/or external source data transmitted from the AR/VR system through a known wired/wireless data network will be apparent to those of ordinary skill in the art.

It will be understood by those of ordinary skill in the art that only some of techniques, materials, and technical means that may be implemented in embodiments of the disclosure are described herein and illustrated in the drawings. The above detailed description of the embodiments of the disclosure is not intended to limit or define the legal protection scope of the disclosure. Other embodiments that are within the scope of the disclosure may be considered by those of ordinary skill in the art, based on the above description and the appended drawings, and all of such obvious modifications, changes and/or equivalents are within the scope of the disclosure. While the disclosure has been described above with reference to various embodiments of the disclosure, it will be understood by those of ordinary skill in the art that various modifications may be made in the form and particular details thereof without departing from the scope of the disclosure. The disclosure should be defined only by the following claims and their equivalents.

**Claims**

1. A display device (200) comprising:

   at least one virtual object image source (210); and
   at least one variable lens (LC1),
   wherein the at least one variable lens comprises at least two variable optical cells, each of the at least two variable optical cells comprises an electrode pattern for adjusting a focal length of the at least one variable lens, and the electrode pattern is configured to change optical power of the at least one variable lens to an equidistant dioptric step,
   wherein the at least two variable optical cells comprises a first variable optical cell (131) including a first electrode (133) and a second electrode (135) and a second variable optical cell (141) including a third electrode (137) and a fourth electrode (139), and
   wherein the second electrode provided on a side of a substrate and the third electrode provided on another side of the substrate.

2. The display device of claim 1, wherein the equidistant dioptric step is 0.25 diopters.

3. The display device of claim 1, wherein the at least two variable optical cells comprise: a first variable optical cell including a first electrode, a second electrode, and a first liquid crystal layer between the first and second electrodes; and a second variable optical cell including a third electrode, a fourth electrode, and a second liquid crystal layer between the third and fourth electrodes.

4. The display device of claim 3, further comprising a light guide plate configured to transmit light from the virtual object image source and located between the first variable lens and the second variable lens.

5. The display device of claim 4, wherein the first variable lens is located in front of a user's eye.

6. The display device of claim 1, further comprising a light guide plate configured to transmit light from the virtual object image source, and
   wherein the at least one variable lens comprises a first variable lens between the virtual object image sensor and the light guide plate and a second variable lens outside the light guide plate.

7. The display device of claim 1, wherein the electrode pattern comprises concentric ring electrodes and a circular electrode at a center of the concentric ring electrodes.

8. The display device of claim 1, wherein the electrode pattern comprises parallel strip electrodes arranged in a horizontal direction or a vertical direction.

9. The display device of claim 1, wherein the at least one variable electrode comprises: a first variable electrode of first optical power; and a second variable electrode of second optical power that is the same as the first optical power in terms of magnitude and opposite in sign to the first optical power.

10. The display device of claim 1, wherein the at least one variable lens comprises: a first variable lens of first optical power and second optical power for correcting a refractive error of a user's eye; and a second variable lens of third optical power that is the same as the first optical power in terms of magnitude and opposite in sign to the first optical power.

11. The display device of claim 1, wherein the at least one variable lens comprises: a first variable lens of first optical power and second optical power for correction of a refractive error of a user's eye; and a second variable lens of third optical power that is the same as the second optical power in terms of magnitude.

12. The display device of claim 1, wherein the at least two variable optical cells comprise a polarization-dependent electrode pattern or a polarization-independent electrode pattern.

13. The display device of claim 1, wherein the at least one variable lens is configured to have optical power for correcting a refractive error of a user's eye.

14. The display device of claim 1, wherein the at least one variable lens is configured to have optical power that is zero.

15. The display device of claim 1, wherein the at least one variable lens is configured to have total optical power of a range of -4 diopters to +4 diopters.

**Patentansprüche**

1. Anzeigevorrichtung (200), umfassend:

   wenigstens eine virtuelle Objektbildquelle (210); und
   wenigstens eine variable Linse (LC1),
   wobei die wenigstens eine variable Linse wenigstens zwei variable optische Zellen umfasst, wobei jede der wenigstens zwei variablen optischen Zellen ein Elektrodenmuster zum Anpassen einer Brennweite der wenigstens einen variablen Linse umfasst, und
   das Elektrodenmuster dazu ausgestaltet ist, die optische Leistung der wenigstens einen variablen Linse auf einen äquidistanten Dioptrienschritt zu ändern,
   wobei die wenigstens zwei variablen optischen Zellen eine erste variable optische Zelle (131), die eine erste Elektrode (133) und eine zweite Elektrode (135) umfasst, und eine zweite variable optische Zelle (141) umfassen, die eine dritte Elektrode (137) und eine vierte Elektrode (139) umfasst, und
   wobei die zweite Elektrode auf einer Seite eines Substrats bereitgestellt ist und die dritte Elektrode auf einer anderen Seite des Substrats bereitgestellt ist.

2. Anzeigevorrichtung nach Anspruch 1, wobei der äquidistante Dioptrienschritt 0,25 Dioptrien beträgt.

3. Anzeigevorrichtung nach Anspruch 1, wobei die wenigstens zwei variablen optischen Zellen Folgendes umfassen: eine erste variable optische Zelle, die eine erste Elektrode, eine zweite Elektrode und eine erste Flüssigkristallschicht zwischen der ersten und der zweiten Elektrode umfasst; und eine zweite variable optische Zelle, die eine dritte Elektrode, eine vierte Elektrode und eine zweite Flüssigkristallschicht zwischen der dritten und vierten Elektrode umfasst.

4. Anzeigevorrichtung nach Anspruch 3, ferner umfassend eine Lichtleitplatte, die dazu ausgestaltet ist, Licht von der virtuellen Objektbildquelle zu übertragen, und sich zwischen der ersten variablen Linse und der zweiten variablen Linse befindet.

5. Anzeigevorrichtung nach Anspruch 4, wobei sich die erste variable Linse vor dem Auge eines Benutzers befindet.

6. Anzeigevorrichtung nach Anspruch 1, ferner umfassend eine Lichtleitplatte, die dazu ausgestaltet ist, Licht von der virtuellen Objektbildquelle zu übertragen, und
   wobei die wenigstens eine variable Linse eine erste variable Linse zwischen dem virtuellen Objektbildsensor und der Lichtleitplatte und eine zweite variable Linse außerhalb der Lichtleitplatte umfasst.

7. Anzeigevorrichtung nach Anspruch 1, wobei das Elektrodenmuster konzentrische Ringelektroden und eine kreisförmige Elektrode an einem Mittelpunkt der konzentrischen Ringelektroden umfasst.

8. Anzeigevorrichtung nach Anspruch 1, wobei das Elektrodenmuster parallele Bandelektroden umfasst, die in horizontaler Richtung oder vertikaler Richtung angeordnet sind.

9. Anzeigevorrichtung nach Anspruch 1, wobei die wenigstens eine variable Elektrode Folgendes umfasst: eine erste variable Elektrode mit einer ersten optischen Leistung und eine zweite variable Elektrode mit einer zweiten optischen Leistung, die die gleiche Größe wie die erste optische Leistung aufweist und das entgegengesetzte Vorzeichen wie die erste optische Leistung aufweist.

10. Anzeigevorrichtung nach Anspruch 1, wobei die wenigstens eine variable Linse Folgendes umfasst: eine erste variable Linse mit einer ersten optischen Leistung und einer zweiten optischen Leistung zum Korrigieren eines Brechungsfehlers des Auges eines Benutzers und eine zweite variable Linse mit einer dritten optischen Leistung, die die gleiche Größe wie die erste optische Leistung aufweist und das entgegengesetzte Vorzeichen wie die erste optische Leistung aufweist.

11. Anzeigevorrichtung nach Anspruch 1, wobei die wenigstens eine variable Linse Folgendes umfasst: eine erste variable Linse mit einer ersten optischen Leistung und einer zweiten optischen Leistung zur Korrektur eines Brechungsfehlers des Auges eines Benutzers und eine zweite variable Linse mit einer dritten optischen Leistung, die die gleiche Größe wie die zweite optische Leistung aufweist.

12. Anzeigevorrichtung nach Anspruch 1, wobei die wenigstens zwei variablen optischen Zellen ein polarisationsabhängiges Elektrodenmuster oder ein polarisationsunabhängiges Elektrodenmuster umfassen.

13. Anzeigevorrichtung nach Anspruch 1, wobei die wenigstens eine variable Linse dazu ausgestaltet ist, eine optische Leistung zum Korrigieren eines Brechungsfehlers des Auges eines Benutzers aufzuweisen.

14. Anzeigevorrichtung nach Anspruch 1, wobei die wenigstens eine variable Linse dazu ausgestaltet ist, eine optische Leistung aufzuweisen, die null beträgt.

15. Anzeigevorrichtung nach Anspruch 1, wobei die wenigstens eine variable Linse dazu ausgestaltet ist, eine optische Gesamtleistung in einem Bereich von -4 Dioptrien bis +4 Dioptrien aufzuweisen.

**Revendications**

1. Dispositif d'affichage (200) comprenant :

   au moins une source d'image d'objet virtuel (210) ; et
   au moins une lentille variable (LC1),
   dans lequel l'au moins une lentille variable comprend au moins deux cellules optiques variables, chacune des au moins deux cellules optiques variables comprend un motif d'électrode pour ajuster une distance focale de l'au moins une lentille variable, et le motif d'électrode est configuré pour modifier la puissance optique de l'au moins une lentille variable sur un échelon de dioptrie équidistant,
   dans lequel les au moins deux cellules optiques variables comprennent une première cellule optique variable (131) incluant une première électrode (133) et une deuxième électrode (135) et une seconde cellule optique variable (141) incluant une troisième électrode (137) et une quatrième électrode (139), et
   dans lequel la deuxième électrode est fournie sur un côté d'un substrat et la troisième électrode est fournie sur un autre côté du substrat.

2. Dispositif d'affichage selon la revendication 1, dans lequel l'échelon de dioptrie équidistant est de 0,25 dioptrie.

3. Dispositif d'affichage selon la revendication 1, dans lequel les au moins deux cellules optiques variables comprennent : une première cellule optique variable incluant une première électrode, une deuxième électrode et une première couche de cristaux liquides entre les première et deuxième électrodes ; et une seconde cellule optique variable incluant une troisième électrode, une quatrième électrode et une seconde couche de cristaux liquides entre les troisième et quatrième électrodes.

4. Dispositif d'affichage selon la revendication 3, comprenant en outre une plaque de guidage de lumière configurée pour transmettre la lumière en provenance de la source d'image d'objet virtuel et située entre la première lentille variable et la seconde lentille variable.

5. Dispositif d'affichage selon la revendication 4, dans lequel la première lentille variable est située devant l'oeil d'un utilisateur.

6. Dispositif d'affichage selon la revendication 1, comprenant en outre une plaque de guidage de lumière configurée pour transmettre la lumière en provenance de la source d'image d'objet virtuel, et
   dans lequel l'au moins une lentille variable comprend une première lentille variable entre le capteur d'image d'objet virtuel et la plaque de guidage de lumière et une seconde lentille variable à l'extérieur de la plaque de guidage de lumière.

**7.** Dispositif d'affichage selon la revendication 1, dans lequel le motif d'électrode comprend des électrodes annulaires concentriques et une électrode circulaire au centre des électrodes annulaires concentriques.

**8.** Dispositif d'affichage selon la revendication 1, dans lequel le motif d'électrode comprend des électrodes en bandes parallèles agencées dans une direction horizontale ou une direction verticale.

**9.** Dispositif d'affichage selon la revendication 1, dans lequel l'au moins une électrode variable comprend : une première électrode variable d'une première puissance optique ; et une seconde électrode variable d'une seconde puissance optique qui est identique à la première puissance optique en termes de grandeur et de signe opposé par rapport à la première puissance optique.

**10.** Dispositif d'affichage selon la revendication 1, dans lequel l'au moins une lentille variable comprend : une première lentille variable d'une première puissance optique et d'une seconde puissance optique pour corriger une erreur de réfraction de l'oeil d'un utilisateur ; et une seconde lentille variable d'une troisième puissance optique qui est identique à la première puissance optique en termes de grandeur et de signe opposé par rapport à la première puissance optique.

**11.** Dispositif d'affichage selon la revendication 1, dans lequel l'au moins une lentille variable comprend : une première lentille variable d'une première puissance optique et d'une seconde puissance optique pour corriger une erreur de réfraction de l'oeil d'un utilisateur ; et une seconde lentille variable d'une troisième puissance optique qui est identique à la seconde puissance optique en termes de grandeur.

**12.** Dispositif d'affichage selon la revendication 1, dans lequel les au moins deux cellules optiques variables comprennent un motif d'électrode dépendant de la polarisation ou un motif d'électrode indépendant de la polarisation.

**13.** Dispositif d'affichage selon la revendication 1, dans lequel l'au moins une lentille variable est configurée pour avoir la puissance optique destinée à corriger une erreur de réfraction de l'œil d'un utilisateur.

**14.** Dispositif d'affichage selon la revendication 1, dans lequel l'au moins une lentille variable est configurée pour avoir une puissance optique qui est égale à zéro.

**15.** Dispositif d'affichage selon la revendication 1, dans lequel l'au moins une lentille variable est configurée pour avoir une puissance optique comprise dans une plage de -4 dioptries à +4 dioptries.

# FIG. 1

# FIG. 2

**FIG. 3**

# FIG. 4A

LC1(LC2)

# FIG. 4B

LC1(LC2)

# FIG. 4C

LC1(LC2)

FIG. 5

# FIG. 6

100

LC 2 ($-D_{virt}$)

120

LC 1 ($D_{virt}$)

110

E

# FIG. 7

100

LC 2 ($-D_{virt}$)

120

LC 1 ($D_{virt}+D_{err\_eye}$)

110

E

# FIG. 8

LC 2

220

LC 1

210

E

200

# FIG. 9

LC 2 ($D_{virt}=0$)

220

LC 1 ($D_{virt}$)

210

E

200

# FIG. 10

# FIG. 11

# FIG. 12

# FIG. 13

# FIG. 14

# FIG. 15

# FIG. 16

410

411

# FIG. 17

420

421

FIG. 18

EP 4 012 463 B1

FIG. 19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2018284464 A1
- US 2014347619 A1
- US 2018275394 A1
- US 10379419 B1
- US 20150277151 A

### Non-patent literature cited in the description

- **SUN Y.N. et al.** Development of liquid crystal adaptive lens with a circular electrode for imaging application, and integrated optics. *apparatus, material, and technology VII - International Society for Optics and Photonics*, 2003, vol. 4987, 209-220
- Liquid crystal display. **CHEN RH**. Basic physics and technology. John Wiley & Sons, 2011
- Active matrix liquid crystal display. **DEN BOER W.** Basic skills and application. Elsevier, 2011
- **LI G. et al.** processings of high-efficiency switchable electro-optic diffraction lens applicable to opthalmological optics. National Academy of Sciences, 2006, vol. 103, 6100-6104